# EUROPEAN PATENT APPLICATION

(11) **EP 4 635 789 A1**
(43) Date of publication of application: **22.10.2025**
(21) Application number: 24915837.9
(22) Date of filing: 05.02.2024
(51) Int. Cl.: B60L 58/15, B60L 3/00

(54) **VEHICLE-MOUNTED BATTERY CHARGING POWER CONTROL METHOD AND DEVICE, VEHICLE AND MEDIUM**

(30) Priority: 30.01.2024 CN 202410137191
(71) Applicant: Chongqing Changan Automobile Co., Ltd., Chongqing 400023 (CN)
(72) Inventor: HE, Xinxiang, Chongqing 400023 (CN); HU, Xianli, Chongqing 400023 (CN); XIANG, Guangjun, Chongqing 400023 (CN); YAN, Yawei, Chongqing 400023 (CN)
(74) Representative: Keller Schneider Patent- und Markenanwälte AG
(86) International application number: PCT/CN2024/076074
(87) International publication number: WO 2025/161047

(57) **Abstract**

The present application relates to the technical field of in-vehicle battery charging, and discloses a method and apparatus for controlling charging power of an in-vehicle battery, a vehicle, and a medium. The method comprises: acquiring a current battery charging power boundary and a current actual charging power of the in-vehicle battery of a target vehicle during driving; determining an overcharging risk level of the charging power of the in-vehicle battery based on a difference between the current battery charging power boundary and the current actual charging power; determining a charging power adjustment solution based on the overcharging risk level of the charging power; and controlling operation of the target vehicle based on the charging power adjustment solution. In the present application, the overcharging risk level of the charging power of the in-vehicle battery is determined by identifying the difference between the current battery charging power boundary and the current actual charging power of the in-vehicle battery, and a charging power adjustment solution is determined according to the corresponding risk level to control operation of the vehicle, so as to avoid a safety risk of the battery reporting an overcharging fault, improve the driving stability of the vehicle, and enhance the driving experience of the user.

## Description

### Technical Field

The present application relates to the technical field of in-vehicle battery charging, in particular to a method and apparatus for controlling charging power of an in-vehicle battery, a vehicle, and a medium.

### Background

A vehicle equipped with a battery module with a charging function may experience a reduction in charging power boundaries when operating in low-temperature environments or during emergency braking after rapid acceleration. This makes the actual charging power prone to continuously exceeding the charging power boundary and leads to overcharging, thereby causing a battery to report an overcharging fault, influencing the driving stability of the vehicle and deteriorating the driving experience of the user.

### Summary of the Invention

In view of this, the present application provides a method and apparatus for controlling charging power of an in-vehicle battery, a vehicle, and a medium, to solve the problem in the related art that the in-vehicle battery is prone to continuous overcharging during operating conditions of a vehicle, thereby resulting in an overcharging fault alarm and affecting the driving experience of the user.

In a first aspect, the present application provides a method for controlling the charging power of an in-vehicle battery, and the method includes:
acquiring a current battery charging power boundary and a current actual charging power of the in-vehicle battery of a target vehicle during driving;
determining an overcharging risk level of the charging power of the in-vehicle battery based on a difference between the current battery charging power boundary and the current actual charging power;
determining a charging power adjustment solution based on the overcharging risk level of the charging power; and
controlling operation of the target vehicle based on the charging power adjustment solution.

In the present application, the overcharging risk level of the charging power of the in-vehicle battery is determined by identifying a difference between the current battery charging power boundary and the current actual charging power of the in-vehicle battery, and a charging power adjustment solution is determined according to the corresponding risk level to control operation of the vehicle, so as to avoid a safety risk of battery overcharging faults caused by continuous overcharging of the in-vehicle battery, improve the driving stability of the vehicle, and enhance the driving experience of the user.

In an optional embodiment, the step of determining an overcharging risk level of the charging power of the in-vehicle battery based on a difference between the current battery charging power boundary and the current actual charging power includes:
determining a current difference interval corresponding to the difference between the current battery charging power boundary and the current actual charging power based on a preset division of ranges of difference intervals; and
determining the overcharging risk level of the charging power of the target vehicle corresponding to the current difference interval.

In the present application, as to the difference between the battery charging power boundary and the actual charging power, difference intervals and corresponding overcharging risk levels of the charging power are divided. The overcharging risk level of the charging power of the target vehicle is determined through the difference interval to which the current value of the difference belongs, and the overcharging risks are precisely differentiated. Moreover, the division methods of the difference intervals and risk levels can be flexibly set to meet the control requirements of different vehicles, thereby improving flexible control of overcharging of the in-vehicle battery charging power and expanding the application scope.

In an optional embodiment, the difference intervals include: a first difference interval, a second difference interval, and a third difference interval;
a maximum value of the first difference interval is less than a minimum value of the second difference interval;
a maximum value of the second difference interval is less than a minimum value of the third difference interval;
the step of determining the overcharging risk level of the charging power of the target vehicle corresponding to the current difference interval includes:
   when the current difference interval is the first difference interval, determining that the overcharging risk level of the charging power of the target vehicle is high risk;
   when the current difference interval is the second difference interval, determining that the overcharging risk level of the charging power of the target vehicle is low risk; and
   when the current difference interval is the third difference interval, determining that the overcharging risk level of the charging power of the target vehicle is no risk.

In the present application, the difference intervals are divided into three levels and correspondingly the overcharging risk levels of the charging power of the target vehicle are divided into high risk, low risk, and no risk. This not only meets the basic control requirements of the vehicle for in-vehicle battery charging, but also reduces the control complexity and improves the practicality of the in-vehicle battery charging power control.

In an optional embodiment, the step of determining the charging power adjustment solution based on the overcharging risk level of the charging power includes:
when the overcharging risk level of the charging power is high risk, determining that the charging power adjustment solution is a solution for reducing the power of a power generation end;
when the overcharging risk level of the charging power is low risk, determining that the charging power adjustment solution is a solution for increasing the power of a power consumption end; and
when the overcharging risk level of the charging power is no risk, determining that the charging power adjustment solution is a solution for maintaining the current operating state of the vehicle.

In the present application, by adopting a solution of reducing the power of a power generation end during high-risk situations, the actual battery charging power can quickly drop within a safety threshold range, thereby avoiding overcharging fault alarms of the battery, with fast response speed and high control efficiency. Moreover, during low-risk situations, a solution of increasing the power of a power consumption end is used, thereby meeting the economic requirements of the vehicle while ensuring safe operation of the battery; excess charging power at a charging end is reasonably utilized, to avoid energy waste, improve the economy of the whole vehicle, and further enhance the driving experience of the user. During risk-free situations, a solution of maintaining the current operating state of the vehicle is used, so as to simplify the vehicle control process and improve the control efficiency.

In an optional embodiment, the step of determining that the charging power adjustment solution is a solution for reducing the power of a power generation end includes:
determining a target adjustment power based on a current value of the difference;
determining a power decrease rate of the power generation end in each control cycle based on the target adjustment power; and
obtaining a solution for reducing the power of the power generation end based on the power decrease rate of the power generation end in each control cycle.

In the present application, the adjustment power is determined by utilizing the value of the difference between the battery charging power boundary and the actual charging power, and the power decrease rate is adjusted according to a control cycle, thereby achieving refined adjustment of the power decrease rate at the power generation end and precise control of the charging power of the in-vehicle battery, reducing a safety hazard of overcharging alarm, and further improving the safety of battery charging during vehicle driving.

In an optional embodiment, the step of determining that the charging power adjustment solution is a solution for increasing the power of the power consumption end includes:
determining a target adjustment power based on the current value of the difference;
determining a power increase rate of the power consumption end in each control cycle based on the target adjustment power; and
obtaining a solution for increasing the power of the power consumption end based on the power increase rate of the power consumption end in each control cycle.

In the present application, the adjustment power is determined by utilizing the value of the difference between the battery charging power boundary and the actual charging power, and the power increase rate is adjusted according to a control cycle, thereby achieving refined adjustment of the power increase rate of the power consumption end and precise control of the charging power of the in-vehicle battery, and further improving the economy of the whole vehicle.

In an optional embodiment, the step of controlling the operation of the target vehicle based on the charging power adjustment solution includes:
reducing the power of the power generation end of the target vehicle in a current control cycle based on a power decrease rate of the power generation end in each control cycle, or increasing the power of the power consumption end of the target vehicle in a current control cycle based on a power increase rate of the power consumption end in each control cycle; and
repeating the step of acquiring the current battery charging power boundary and the current actual charging power of the in-vehicle battery of the target vehicle during driving until the difference is greater than a preset threshold.

In the present application, after the operation of the vehicle is controlled by reducing the power of the power generation end or increasing the power of the power consumption end in each control cycle, the battery charging power boundary and the actual charging power are reacquired, and the operation of the vehicle is cyclically controlled, thereby further improving precise control of the operation of the vehicle, and improving the economy of the vehicle to a maximum degree while avoiding a problem of overcharging alarm of the in-vehicle battery.

In an optional embodiment, the step of increasing the power of the power consumption end of the target vehicle in a current control cycle based on a power increase rate of the power consumption end in each control cycle includes:
increasing the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle.

In the present application, when excess power generated at a power generation end is utilized by different flexibly-usable electrical devices at the power consumption end of the vehicle, the power generated by the motor through recovery can be fully utilized to further avoid energy waste and improve the driving experience of the user during a driving process.

In an optional embodiment, the step of increasing the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle includes:
acquiring current temperature and target temperature inside the target vehicle;
when the current temperature is greater than the target temperature, increasing the power of the air conditioning compressor of the target vehicle in the current control cycle based on the power increase rate of the power consumption end in each control cycle;
when the current temperature is lower than the target temperature, increasing the cabin heating power of the target vehicle in the current control cycle based on the power increase rate of the power consumption end in each control cycle;
when the current temperature is equal to the target temperature, if the actual temperature of the in-vehicle battery is inconsistent with the optimal operating temperature, increasing the heating or cooling power of the in-vehicle battery of the target vehicle in the current control cycle based on the power increase rate of the power consumption end in each control cycle; and
if the actual temperature of the in-vehicle battery is consistent with the optimal operating temperature, increasing the power of the in-vehicle low-power electrical device of the target vehicle in the current control cycle based on the power increase rate of the power consumption end in each control cycle.

In the present application, from the perspective of user experience, the power consumption at the power consumption end of the vehicle is allocated by setting a priority order of each power consumption object. This prioritizes meeting the demands of the user for driving environment temperature, then enhances the operating performance of the battery, and finally the remaining power is utilized by other in-vehicle low-power electrical devices, thereby further improving the user experience.

In a second aspect, the present application provides an apparatus for controlling the charging power of an in-vehicle battery, and the apparatus includes:
a first acquisition module configured to acquire a current battery charging power boundary and a current actual charging power of the in-vehicle battery of a target vehicle during driving;
a first processing module configured to determine an overcharging risk level of the charging power of the in-vehicle battery based on a difference between the current battery charging power boundary and the current actual charging power;
a second processing module configured to determine a charging power adjustment solution based on the overcharging risk level of the charging power; and
a third processing module configured to control operation of the target vehicle based on the charging power adjustment solution.

In an optional embodiment, the first processing module includes:
a first processing unit configured to determine a current difference interval corresponding to the difference between the current battery charging power boundary and the current actual charging power based on a preset division of ranges of difference intervals; and
a second processing unit configured to determine the overcharging risk level of the charging power of the target vehicle corresponding to the current difference interval.

In an optional embodiment, the difference intervals include a first difference interval, a second difference interval, and a third difference interval;
a maximum value of the first difference interval is less than a minimum value of the second difference interval;
a maximum value of the second difference interval is less than a minimum value of the third difference interval;
the second processing unit includes:
   a first processing subunit configured to determine that the overcharging risk level of the charging power of the target vehicle is high risk when the current difference interval is the first difference interval;
   a second processing subunit configured to determine that the overcharging risk level of the charging power of the target vehicle is low risk when the current difference interval is the second difference interval; and
   a third processing subunit configured to determine that the overcharging risk level of the charging power of the target vehicle is no risk when the current difference interval is the third difference interval.

In an optional embodiment, the second processing module includes:
a third processing unit configured to determine that the charging power adjustment solution is a solution for reducing the power of a power generation end when the overcharging risk level of the charging power is high risk;
a fourth processing unit configured to determine that the charging power adjustment solution is a solution for increasing the power of a power consumption end when the overcharging risk level of the charging power is low risk; and
a fifth processing unit configured to determine that the charging power adjustment solution is a solution for maintaining the current operating state of the vehicle when the overcharging risk level of the charging power is no risk.

In an optional embodiment, the third processing unit includes:
a fourth processing subunit configured to determine a target adjustment power based on a current value of the difference;
a fifth processing subunit configured to determine a power decrease rate of the power generation end in each control cycle based on the target adjustment power; and
a sixth processing subunit configured to obtain a solution for reducing the power of the power generation end based on the power decrease rate of the power generation end in each control cycle.

In an optional embodiment, the fourth processing unit includes:
a seventh processing subunit configured to determine a target adjustment power based on the current value of the difference;
an eighth processing subunit configured to determine a power increase rate of the power consumption end in each control cycle based on the target adjustment power; and
a ninth processing subunit configured to obtain a solution for increasing the power of the power consumption end based on the power increase rate of the power consumption end in each control cycle.

In an optional embodiment, the third processing module includes:
a sixth processing unit configured to reduce the power of the power generation end of the target vehicle in a current control cycle based on a power decrease rate of the power generation end in each control cycle, or increase the power of the power consumption end of the target vehicle in a current control cycle based on a power increase rate of the power consumption end in each control cycle; and
a seventh processing unit configured to recall the first acquisition module to operate repeatedly until the difference is greater than a preset threshold.

In an optional embodiment, the sixth processing unit includes:
a tenth processing subunit configured to increase the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle.

In an optional embodiment, the tenth processing subunit includes:
a first acquisition sub-module configured to acquire current temperature and target temperature inside the target vehicle;
a first processing submodule configured to increase the power of the air conditioning compressor of the target vehicle in the current control cycle based on the power increase rate of the power consumption end in each control cycle when the current temperature is greater than the target temperature;
a second processing submodule configured to increase the cabin heating power of the target vehicle in the current control cycle based on the power increase rate of the power consumption end in each control cycle when the current temperature is lower than the target temperature;
a third processing submodule configured to: when the current temperature is equal to the target temperature, if the actual temperature of the in-vehicle battery is inconsistent with the optimal operating temperature, increase the heating or cooling power of the in-vehicle battery of the target vehicle in the current control cycle based on the power increase rate of the power consumption end in each control cycle; and
a fourth processing submodule configured to: if the actual temperature of the in-vehicle battery is consistent with the optimal operating temperature, increase the power of the in-vehicle low-power electrical device of the target vehicle in the current control cycle based on the power increase rate of the power consumption end in each control cycle.

In a third aspect, the present application provides a vehicle, and the vehicle includes a memory and a processor, wherein the memory and the processor are communicatively connected with each other, computer instructions are stored in the memory, and the processor is configured to execute the method provided in the above first aspect or any corresponding implementation manner thereof by executing the computer instructions.

In a fourth aspect, the present application provides a computer-readable storage medium, wherein the computer-readable storage medium has computer instructions stored therein, and the computer instructions are configured to enable a computer to execute the method provided in the above first aspect or any corresponding implementation manner thereof.

Beneficial effects of the present application are as follows:
In the technical solution provided in the present application, the overcharging risk level of the charging power of the in-vehicle battery is determined by identifying the difference between the current battery charging power boundary and the current actual charging power of the in-vehicle battery, and a charging power adjustment solution is determined according to the corresponding risk level to control operation of the vehicle, so as to avoid a safety risk of the battery reporting an overcharging fault, improve the driving stability of the vehicle, and enhance the driving experience of the user.

### Brief Description of the Drawings

In order to more clearly illustrate the technical solutions in the specific embodiments of the present application or in the prior art, the accompanying drawings that need to be used in the description of the specific embodiments or in the prior art should be introduced briefly. Obviously, the drawings in the following description are some embodiments of the present application. For those skilled in the art, other drawings can also be obtained from these drawings without any creative effort.
Fig. 1 is a flow diagram of a method for controlling the charging power of an in-vehicle battery according to an embodiment of the present application;
Fig. 2 is a flow diagram of another method for controlling the charging power of an in-vehicle battery according to an embodiment of the present application;
Fig. 3 is a schematic diagram of a specific control process of the charging power of an in-vehicle battery according to an embodiment of the present application;
Fig. 4 is a structural block diagram of an apparatus for controlling the charging power of an in-vehicle battery according to an embodiment of the present application;
Fig. 5 is a structural schematic diagram of a vehicle according to an embodiment of the present application.

### Detailed Description

To make the objectives, technical solutions, and advantages of the embodiments of the present application clearer, the technical solutions in the embodiments of the present application will be described clearly and completely below in conjunction with the accompanying drawings in the embodiments of the present application. Obviously, the described embodiments are part but not all of the embodiments of the present application. Based on the embodiments in the present application, all the other embodiments obtained by those skilled in the art without any creative effort shall all fall within the protection scope of the present application.

A vehicle equipped with a battery module with a charging function may experience a reduction in charging power boundaries when operating in low-temperature environments or during emergency braking after rapid acceleration. This makes the actual charging power prone to continuously exceeding the charging power boundary, thereby leading to overcharging faults of the battery, influencing the driving stability of the vehicle and deteriorating the driving experience of the user.

Exemplarily, in a driving condition of a vehicle, assume that the current charging power boundary of the in-vehicle battery of a vehicle is 50 kW, if the vehicle is in a rapid acceleration state, the engine is operating at a high power with an operating power of 50 kW, at this time, when emergency braking is applied, an original power of 80 kW can be recovered. Due to the limitation of the charging power boundary, the calculated braking power is 50 kW. Before the engine torque drops, the engine still outputs power, for example, 10 kW, therefore, the actual charging power of the in-vehicle battery is 50+10=60 kW, and will exceed the allowable charging power boundary of the battery. If this overcharging situation persists for a certain period of time, such as 2 s, the battery will automatically alarm.

In another driving condition of the vehicle, assume that the charging power boundary of the in-vehicle battery is 0 when the vehicle is in an extremely low-temperature environment, and the current state of charge of the in-vehicle battery is 20%. At this time, the signal power of the air conditioner on the vehicle is 10 kW, so the generator outputs a power of 10 kW. However, since the actual power of the air conditioner is only 5 kW, the actual battery charging power is 10-5=5 kW, and exceeds the allowable charging power boundary of the battery. Similarly, if this overcharging situation persists for a certain period of time, such as 2 s, the battery will automatically alarm. It can be seen that there are very large differences in the charging power boundaries of the in-vehicle battery under different driving conditions of the vehicle. Moreover, the charging power boundary has no relation to the state of charge of the in-vehicle battery. Even if the current state of charge of the in-vehicle battery is low, the problem of overcharging of the in-vehicle battery may still occur.

In addition, if the actual charging power of the in-vehicle battery exceeds the charging power boundary, risks such as further restriction of the charging power boundary, loss of vehicle power, and damage to internal components like battery relays may also exist depending on the magnitude of the excess power. Moreover, it may also cause drivability issues, for example, a sudden reduction in the boundary of braking energy recovery will lead to changes in a braking force. Exemplarily, as the charging power boundary is further restricted, issues such as waste of generated power and inability to maintain battery charge will arise.

In related technologies, although there are control solutions to prevent overcharging of in-vehicle batteries, these solutions are mainly used to prevent overcharging when the in-vehicle power battery is directly charged by a charging pile, without considering the problem of battery charging when the vehicle is in use. There are significant differences in charging power boundaries and real-time charging power limitation methods between an in-use state of a vehicle and a charging pile charging mode, thereby making it difficult to apply the control solutions for preventing overcharging of in-vehicle batteries in the charging pile charging mode to the operating conditions of a vehicle.

In response to the above problems regarding battery charging power control during vehicle use, as to the traditional open-loop control logic, the power of various in-vehicle electrical appliances, such as the power of a generator, the power of a drive motor, the power of an air conditioning compressor, the power of a PTC heater, and their losses are mainly monitored to simulate and calculate the simulated battery charging power. By comparing the difference between the simulated battery charging power and the battery charging power boundary, the power of the power generation end is reversely restricted to prevent overcharging of the battery. This control method cannot solve the problem of battery overcharging caused by a large deviation between the reported power of each electrical appliance and the actual power.

To this end, the present application provides a solution for controlling the charging power of an in-vehicle battery and the solution is applied to vehicles equipped with a battery module with a charging function. The vehicle can be either a pure electric vehicle or a hybrid vehicle, as long as the vehicle is equipped with a battery module with a charging function. By monitoring in real time the difference between the actual battery charging power and the fault charging power, i.e., the battery charging power boundary, the power of the power generation end is reduced in advance or the power of the power consumption end is increased, so as to reduce the risk of overcharging of the battery charging power, and solve the problem that when the charging power boundary of the in-vehicle battery is low under operating conditions such as rapid acceleration and low temperature, the battery reports a fault and the vehicle cannot run due to inaccurate control of the charging power by an electronic control system during engine startup and coasting energy recovery, thereby ensuring the robustness of the vehicle.

According to the embodiments of the present application, an embodiment of a method for controlling the charging power of an in-vehicle battery is provided. It should be noted that the steps shown in the flow charts of the accompanying drawings can be executed in a computer system such as a set of computer-executable instructions. Moreover, although a logical order is shown in the flow charts, in some cases, the steps shown or described may be executed in an order different from the order herein.

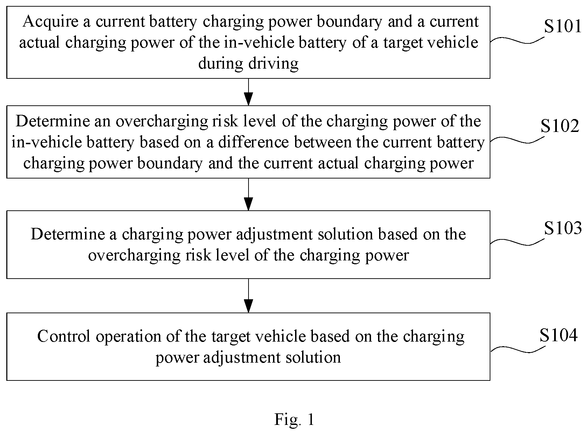

In this embodiment, a method for controlling the charging power of an in-vehicle battery is provided and is applied to a vehicle equipped with a battery module with a charging function, i.e., an in-vehicle battery. Specifically, the method can be applied to the vehicle controller of the vehicle, such as a single-chip microcomputer or a microprocessor. Fig. 1 is a flow chart of the method for controlling the charging power of an in-vehicle battery according to an embodiment of the present application. As shown in Fig. 1, the process includes the following steps:
step S101: acquiring a current battery charging power boundary and a current actual charging power of the in-vehicle battery of a target vehicle during driving.

The current battery charging power boundary of the in-vehicle battery is directly reported by the in-vehicle battery to a vehicle controller. The charging power boundary refers to a charging power value corresponding to the overcharging alarm of the in-vehicle battery. Under different operating conditions, the charging power values of the overcharging alarm of the in-vehicle battery are different. The current actual charging power can be calculated by monitoring the charging voltage and charging current of the in-vehicle battery.

Step S102: determining an overcharging risk level of the charging power of the in-vehicle battery based on a difference between the current battery charging power boundary and the current actual charging power.

Specifically, in the actual driving conditions of the vehicle, the actual charging power may exceed the battery charging power boundary. Therefore, the difference between the current battery charging power boundary and the current actual charging power mentioned in the embodiments of the present application may be positive or negative. If the difference is negative, it indicates that there is an over-charging risk for the in-vehicle battery, and the smaller the negative value, the greater the over-charging risk. Therefore, the above difference can be used to reflect the overcharging risk of the charging power of the in-vehicle battery, and then the corresponding risk level can be determined.

Step S103: determining a charging power adjustment solution based on the overcharging risk level of the charging power.

Specifically, during the driving process of a vehicle, the charging power adjustment requirements corresponding to overcharging risk levels of different charging powers are different. If the risk is too high, the actual charging power needs to be immediately reduced to avoid an overcharging alarm of the in-vehicle battery. If the risk is low, it is necessary to prevent the risk from continuing to increase while minimizing the waste of power generation as much as possible. Therefore, corresponding charging power adjustment solutions can be determined according to different risk levels.

Step S104: controlling operation of the target vehicle based on the charging power adjustment solution.

Specifically, the vehicle controller controls the operation of the vehicle according to the charging power adjustment solution to achieve adaptive adjustment of the charging power.

In the method for controlling the charging power of an in-vehicle battery provided in the embodiments of the present application, the overcharging risk level of the charging power of the in-vehicle battery is determined by identifying the difference between the current battery charging power boundary and the current actual charging power of the in-vehicle battery, and a charging power adjustment solution is determined according to the corresponding risk level to control operation of the vehicle, so as to avoid a safety risk of battery overcharging faults caused by continuous overcharging of the in-vehicle battery, improve the driving stability of the vehicle, and enhance the driving experience of the user.

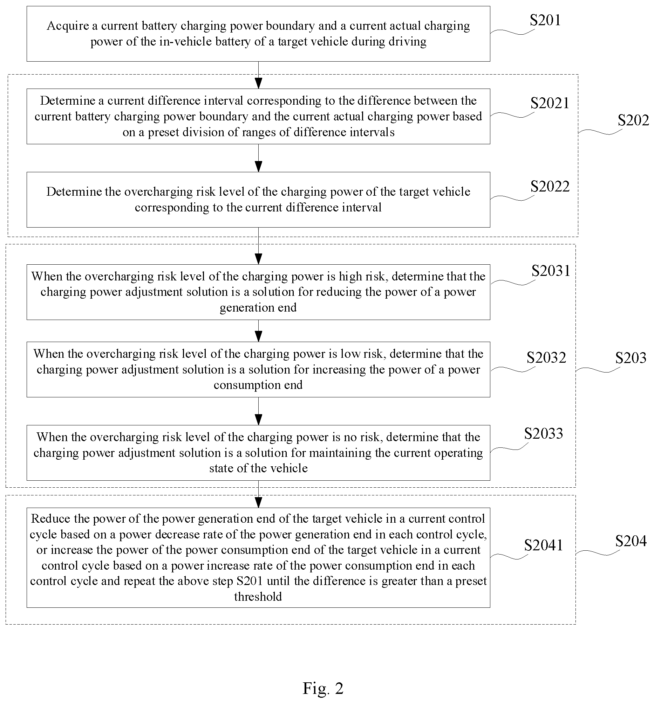

This embodiment further provides a method for controlling the charging power of an in-vehicle battery. This method is applied to a vehicle equipped with a battery module with a charging function, that is, an in-vehicle battery, and can be specifically applied to the vehicle controller of the vehicle, such as a single chip microcomputer or a microprocessor. Fig. 2 is a flow chart of the method for controlling the charging power of an in-vehicle battery according to an embodiment of the present application. As shown in Fig. 2, the process includes the following steps:
step S201: acquiring a current battery charging power boundary and a current actual charging power of the in-vehicle battery of a target vehicle during driving. For detailed contents, please refer to the related description of step S101 as shown in Fig. 1, and no further elaboration will be provided herein.

Step S202: determining an overcharging risk level of the charging power of the in-vehicle battery based on a difference between the current battery charging power boundary and the current actual charging power.

Specifically, the above step S202 includes:
Step S2021: determining a current difference interval corresponding to the difference between the current battery charging power boundary and the current actual charging power based on a preset division of ranges of difference intervals.

Exemplarily, the difference intervals include: a first difference interval, a second difference interval, and a third difference interval, wherein a maximum value of the first difference interval is less than a minimum value of the second difference interval; and a maximum value of the second difference interval is less than a minimum value of the third difference interval. Assume that the maximum value of the first difference interval is A, the maximum value of the second difference interval is B, and the minimum value of the third difference interval is C, then A < B < C.

Optionally, the above step S2021 includes:
Step a1: when the current difference interval is the first difference interval, determining that the overcharging risk level of the charging power of the target vehicle is high risk.

Step a2: when the current difference interval is the second difference interval, determining that the overcharging risk level of the charging power of the target vehicle is low risk.

Step a3: when the current difference interval is the third difference interval, determining that the overcharging risk level of the charging power of the target vehicle is no risk.

In the embodiments of the present application, the difference intervals are divided into three levels and correspondingly the overcharging risk levels of the charging power of the target vehicle are divided into high risk, low risk, and no risk. This not only meets the basic control requirements of the vehicle for in-vehicle battery charging, but also reduces the control complexity and improves the practicality of the in-vehicle battery charging power control.

Step S2022: determining the overcharging risk level of the charging power of the target vehicle corresponding to the current difference interval.

Exemplarily, if the current value of the difference is less than or equal to A, it is determined that the overcharging risk level of the charging power of the target vehicle is high risk; if the current value of the difference is greater than A and less than or equal to B, it is determined that the overcharging risk level of the charging power of the target vehicle is low risk; if the current value of the difference is greater than or equal to C, it is determined that the overcharging risk level of the charging power of the target vehicle is low risk. It should be noted that in practical applications, the number of divisions of the difference interval and the corresponding number of divisions of the risk levels can be flexibly set according to the control accuracy requirements of the vehicle for the in-vehicle charging power and the actual operating condition requirements. For example, the risk levels can be set as high risk, medium risk, low risk, and no risk, etc., and the present application is not limited thereto.

In the embodiments of the present application, as to the difference between the battery charging power boundary and the actual charging power, difference intervals and the corresponding overcharging risk levels of the charging power are divided. The overcharging risk level of the charging power of the target vehicle is determined through the difference interval to which the current value of the difference belongs, and the overcharging risks are precisely differentiated. Moreover, the division methods of the difference intervals and risk levels can be flexibly set to meet the control requirements of different vehicles, thereby improving flexible control of overcharging of the in-vehicle battery charging power and expanding the application scope.

Step S203: determining a charging power adjustment solution based on the overcharging risk level of the charging power.

Specifically, the above step S203 includes:
Step S2031: when the overcharging risk level of the charging power is high risk, determining that the charging power adjustment solution is a solution for reducing the power of a power generation end.

Specifically, the above step S2031 includes:
Step b1: determining a target adjustment power based on a current value of the difference.

Specifically, when the current value of the difference is less than zero, it indicates that the actual charging power of the in-vehicle battery exceeds the power boundary, and the charging power needs to be adjusted. Therefore, the target adjustment power can be determined based on the current value of the difference. Exemplarily, the absolute value of the current value of the difference can be used as the target adjustment power to ensure that the actual charging power does not exceed the power boundary after adjustment. In addition, in practical applications, to further reduce the risk of overcharging, a certain power adjustment margin can also be considered based on the current value of the difference to obtain the target adjustment power. Exemplarily, assume that the current value of the difference is -10 kW and the set power adjustment margin is 3 kW, then the final target adjustment power is 10+3=13 kW. This is just an example, and the present application is not limited thereto.

Step b2: determining a power decrease rate of the power generation end in each control cycle based on the target adjustment power.

The control cycle is a communication cycle of the vehicle controller. The vehicle controller sends control instructions to various components of the vehicle according to the communication cycle. Exemplarily, the control cycle is 10 ms, 20 ms, etc., and the present application is not limited thereto.

Specifically, the maximum number of adjustment cycles can be determined according to the overcharging duration condition for an overcharging fault alarm of the in-vehicle battery. The number of target adjustment cycles is determined within the range of the maximum number of adjustment cycles, and then the target adjustment power is allocated using the number of target adjustment cycles to obtain the power decrease rate of the power generation end in each control cycle.

Exemplarily, assume that the overcharging duration is 1 s. That is, when the actual charging power of the in-vehicle battery exceeds the charging power boundary for a duration of 1s, the in-vehicle battery will issue an overcharging alarm. The control cycle of the vehicle controller is 100 ms, then the number of the maximum adjustment cycles is 10. That is, the in-vehicle battery needs to ensure that the actual charging power does not exceed the charging power boundary within 10 control cycles. The maximum value of the number of the target adjustment cycles is 10. Any integer from 1 to 10 can be selected as the number of the target adjustment cycles. Taking the number of the target adjustment cycles as 5 as an example, the power decrease rate of the power generation end in each control cycle is 10/5 = 2 kW. During practical applications, the number of the target adjustment cycles can be flexibly set according to the control requirements and response speed requirements of the vehicle controller. The larger the number of the target adjustment cycles is selected, the more stable the vehicle operation will be. The smaller the number of the target adjustment cycles is selected, the faster the adjustment speed of the charging power of the in-vehicle battery will be, and the lower the risk of overcharging alarm will be, therefore, the power decrease rate of the power generation end in each control cycle can be flexibly adjusted, and the flexibility of the whole vehicle control can be improved.

In addition, during practical applications, the power decrease rate of the power generation end in each control cycle can also be determined according to the magnitude of the target adjustment power. The larger the target adjustment power, the greater the power decrease rate of the power generation end set in the current control cycle, thereby achieving a purpose of rapidly reducing the charging power of the in-vehicle battery. Conversely, the smaller the target adjustment power, the smaller the power decrease rate of the power generation end set in the current control cycle, thereby improving the stability of vehicle operation.

Step b3: obtaining a solution for reducing the power of the power generation end based on the power decrease rate of the power generation end in each control cycle.

Exemplarily, based on the power decrease rate of the power generation end in each control cycle, the engine power can be reduced or the recovery power of the drive motor can be reduced. The specific implementation manners for reducing the engine power and reducing the recovery power of the drive motor belong to the prior art and will not be repeated redundantly herein.

In the embodiments of the present application, the adjustment power is determined by utilizing the difference between the battery charging power boundary and the actual charging power, and the power decrease rate is adjusted according to the control cycle, thereby achieving refined adjustment of the power decrease rate at the power generation end and precise control of the charging power of the in-vehicle battery, reducing the safety hazard of overcharging alarm, and further improving the safety of battery charging during vehicle driving.

Step S2032: when the overcharging risk level of the charging power is low risk, determining that the charging power adjustment solution is a solution for increasing the power of a power consumption end.

Specifically, the above step S2032 includes:
Step c1: determining a target adjustment power based on a current value of the difference. For detailed contents, please refer to the relevant description of the above step b1, and no further elaboration will be provided herein.

Step c2: determining a power increase rate of the power consumption end in each control cycle based on the target adjustment power.

Specifically, the specific implementation process of the above step c2 can be similar to the implementation process of the above step b2, and will not be repeated redundantly herein. In addition, during practical applications, since the overcharging risk level of the charging power is low, at this time, the actual charging power of the in-vehicle battery is usually already below the charging power boundary, and the risk of overcharging alarm is relatively low. Under this operating condition, the main purpose of determining the power increase rate of the power consumption end in each control cycle is to prevent the actual charging power of the in-vehicle battery from continuing to rise. Therefore, by increasing the power increase rate of the power consumption end in each control cycle, the excess power generated by the power generation end can be consumed, thereby meeting the power consumption demand during the driving process of the vehicle, avoiding energy waste, further preventing overcharging fault alarm problems of the in-vehicle battery, and improving the economy of the whole vehicle.

Step c3: obtaining a solution for increasing the power of the power consumption end based on the power increase rate of the power consumption end in each control cycle.

In the embodiments of the present application, the adjustment power is determined by utilizing the difference between the battery charging power boundary and the actual charging power, and the power increase rate is adjusted according to the control cycle, thereby achieving refined adjustment of the power increase rate at the power consumption end and precise control of the charging power of the in-vehicle battery, and further improving the economy of the whole vehicle.

Step S2033: when the overcharging risk level of the charging power is no risk, determining that the charging power adjustment solution is a solution for maintaining the current operating state of the vehicle.

Specifically, when the overcharging risk level of the charging power is no risk, the vehicle controller does not need to adjust the operating state of the vehicle. It is only necessary to keep the vehicle in the current operating state to charge the in-vehicle battery, and the problem of overcharging alarm of the in-vehicle battery will not occur.

In the embodiments of the present application, by adopting a solution of reducing the power of a power generation end during high-risk situations, the actual battery charging power can quickly drop within a safety threshold, thereby avoiding overcharging fault alarms of the battery, with fast response speed and high control efficiency. Moreover, during low-risk situations, a solution of increasing the power of a power consumption end is used, thereby meeting the economic requirements of the vehicle while ensuring safe operation of the battery; excess charging power at a charging end is reasonably utilized, to avoid energy waste, improve the economy of the whole vehicle, and further enhance the driving experience of the user. During risk-free situations, a solution of maintaining the current operating state of the vehicle is used, so as to simplify the vehicle control process and improve the control efficiency.

Step S204: controlling operation of the target vehicle based on the charging power adjustment solution.

Specifically, the above step S204 includes:
Step S2041: reducing the power of the power generation end of the target vehicle in a current control cycle based on a power decrease rate of the power generation end in each control cycle, or increasing the power of the power consumption end of the target vehicle in a current control cycle based on a power increase rate of the power consumption end in each control cycle and repeating the above step S201 until the difference is greater than a preset threshold.

Specifically, after the vehicle controller regulates the charging end or the power consumption end of the vehicle in each control cycle, the above step S201 will be performed again to reacquire the current battery charging power boundary and current actual charging power of the in-vehicle battery, so as to avoid the problems that the battery charging power boundary and the current actual charging power change due to the influence of the environment or the driving conditions during the driving process of the vehicle and the control accuracy will be further influenced, thereby further achieving precise control of the charging power of the in-vehicle battery and enhancing the user experience.

In the embodiments of the present application, after the operation of the vehicle is controlled by reducing the power of the power generation end or increasing the power of the power consumption end in each control cycle, the battery charging power boundary and the actual charging power are reacquired, and the operation of the vehicle is cyclically controlled, thereby further improving the accuracy of vehicle operation control, and improving the economy of the vehicle to a maximum degree while avoiding the problem of overcharging alarm problem of the in-vehicle battery.

Specifically, in the above step S2041, the step of increasing the power of the power consumption end of the target vehicle in the current control cycle based on the power increase rate of the power consumption end in each control cycle includes:
Step d1: increasing the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle.

The cabin heating power can be the power of a PTC heating device arranged in the vehicle or the power of other heating devices. The in-vehicle low-power electrical device includes: ambient lights, vehicle power supplies, etc.

In the embodiments of the present application, when excess power generated at the power generation end is utilized by different flexibly-usable electrical devices at the power consumption end of the vehicle, a motor recovery power can be fully utilized to further avoid energy waste, and improve the driving experience of the user during a driving process.

Exemplarily, the above step d1 includes:
Step e1: acquiring current temperature and target temperature inside the target vehicle.

The target temperature can be a temperature value set by the user or a temperature interval, for example, 25°C, or 24°C to 26°C. The present application is not limited thereto.

Step e2: when the current temperature is greater than the target temperature, increasing the power of the air conditioning compressor of the target vehicle in the current control cycle based on the power increase rate of the power consumption end in each control cycle.

Therefore, the temperature inside the vehicle is reduced by increasing the power of the air conditioning compressor until the temperature inside the vehicle reaches a target temperature set by the user.

Step e3: when the current temperature is lower than the target temperature, increasing the cabin heating power of the target vehicle in the current control cycle based on the power increase rate of the power consumption end in each control cycle.

Therefore, the temperature inside the vehicle is increased by increasing the cabin heating power until the temperature inside the vehicle reaches a target temperature set by the user.

Step e4: when the current temperature is equal to the target temperature, if the actual temperature of the in-vehicle battery is inconsistent with the optimal operating temperature, increasing the heating or cooling power of the in-vehicle battery of the target vehicle in the current control cycle based on the power increase rate of the power consumption end in each control cycle.

Specifically, when the temperature inside the vehicle reaches a suitable temperature set by the user, there is no need to adjust the temperature inside the vehicle. Similar to the above target temperature, this optimal operating temperature can be a specific temperature value or a temperature range. If the actual temperature of the in-vehicle battery is higher than the optimal operating temperature at this time, the battery temperature can be reduced by increasing the battery cooling power until the battery temperature reaches the optimal operating temperature, thereby improving the operating performance of the in-vehicle battery.

Step e5: if the actual temperature of the in-vehicle battery is consistent with the optimal operating temperature, increasing the power of the in-vehicle low-power electrical device of the target vehicle in the current control cycle based on the power increase rate of the power consumption end in each control cycle.

Specifically, when the actual temperature of the in-vehicle battery is within its optimal operating temperature, the excess charging power at the charging end can be used to supply power to other low-power electrical devices in the vehicle, such as ambient lights, thereby not only enhancing the user experience, but also avoiding energy waste.

In the embodiments of the present application, from the perspective of user experience, the power consumption at the power consumption end of the vehicle is allocated by setting a priority order of each power consumption object. This prioritizes meeting the demands of the user for driving environment temperature, then enhances the operating performance of the battery, and finally the remaining power is utilized by other in-vehicle low-power electrical devices, thereby further improving the user experience.

The specific implementation process of the method for controlling the charging power of an in-vehicle battery provided in the embodiments of the present application will be described in detail below in combination with specific application examples.

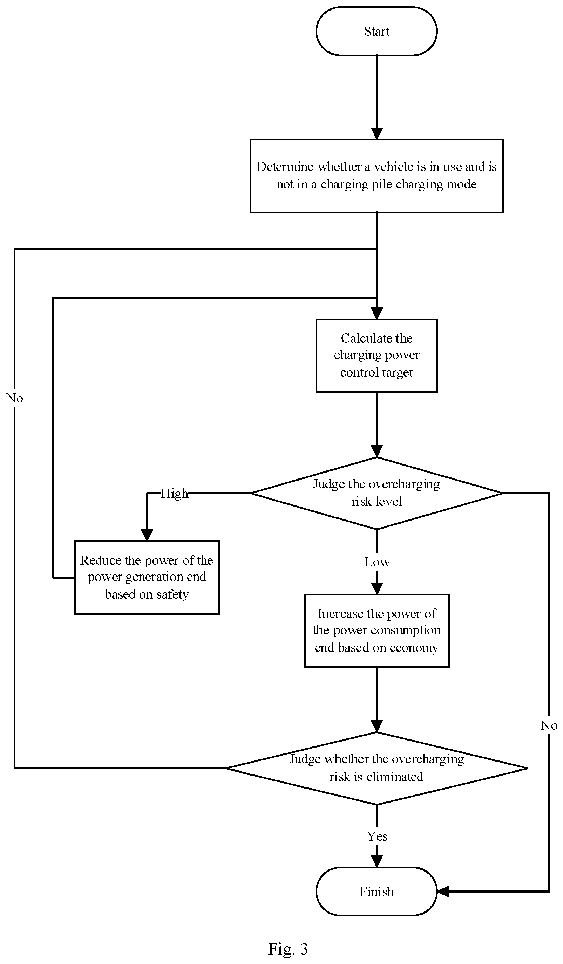

Referring to Fig. 3, Fig. 3 is a schematic diagram of a specific control process for the charging power of the in-vehicle battery of the present application. As shown in Fig. 3, the process consists of six steps in total, which are specifically as follows:
Step 1, determining, by a system, that is, a vehicle controller, whether the vehicle is in use and is not in a charging pile charging mode, wherein since when the vehicle is in the charging pile charging mode, the charging power boundary and the real-time charging power limitation method are both significantly different from those of the vehicle in use, it is necessary to confirm the state first to determine whether to activate the charging power solution of the in-vehicle battery.

Step 2: calculating a charging power control target; and obtaining that the charging power control target is equal to the battery charging power boundary minus the actual battery charging power based on conditions such as the current battery charging power boundary and the actual battery charging power.

Step 3: judging the overcharging risk level, wherein the overcharging risks are divided into three levels: high risk, low risk, and no risk; the high-risk judgment condition can be set as the charging power control target being less than a set value A, that is, the difference between the battery charging power boundary and the actual charging power is less than the set value A, at this time, the actual charging power has exceeded the battery charging power boundary; the low-risk judgment condition can be set as the charging power control target being greater than or equal to the set value A and less than a set value B, at this time, the actual charging power is below but close to the battery charging power boundary; and the no-risk judgment condition can be set as the charging power control target being greater than or equal to a set value C, and at this time, the actual charging power is lower than the charging power boundary, wherein A < B < C.

Step 4: reducing the power of the power generation end based on safety, that is, when it is determined to be high risk in step 3, at this time, the actual charging power has exceeded the battery charging power boundary, at this time, in consideration of safety, it is necessary to quickly reduce the power of the power generation end, i.e., the power of the engine or the recovery power of the drive motor; based on a fact that the charging power control target is axis X, the power decrease rate of the power generation end in each control cycle can be found out from the table, as shown in Table 1 specifically; with the set value A being -5 kW as an example, if the difference between the battery charging power boundary and the actual charging power is equal to -10 kW, then the power of the power generation end is reduced at a rate of 10 kW per second; when the difference between the battery charging power boundary and the actual charging power is equal to -5 kW, the power of the power generation end is reduced at a rate of 5 kW per second.

**Table 1**

| | | | | | | | | | | | | | | | | |
|---|---|---|---|---|---|---|---|---|---|---|---|---|---|---|---|---|
| Charging power control target -kW | - 1 0 | - 9 | - 8 | - 7 | - 6 | - 5 | - 4 | - 3 | - 2 | - 1 | 0 | 1 | 2 | 3 | 4 | 5 |
| Power reduction slope of a power generation end -kW/s | - 1 0 | - 9 | - 8 | - 7 | - 6 | - 5 | - 4 | - 3 | - 2 | - 1 | - 1 | - 1 | - 1 | - 1 | 0 | 0 |

After each control cycle is processed, the system will return to the above second step to recalculate the charging power control target, and return to the third step to judge the overcharging risk level and recalculate a new power reduction slope at the power generation end, until the overcharging risk level in step 3 is judged to be low risk or no risk.

Step 5: increasing the power of the power consumption end based on economy, that is, when the overcharging risk level is judged as low risk in step 3, the actual charging power is below but close to the battery charging power boundary, at this time, in consideration of economy, the power of non-drive motor power consumption ends such as the power of an air conditioning compressor, the cabin heating power of a PTC, the heating or cooling power of a battery, and the power of an in-vehicle low-power electrical device can be increased. In this way, the motor recovery power can be fully utilized under a coasting energy recovery condition. On the premise of charging a part into the battery, the excess part is distributed to the electrical appliances that can be used flexibly. From the perspective of user experience, power distribution and limitation need to be performed for the electrical appliances at the power consumption end. For example, when the target temperature inside the vehicle is lower than the actual temperature, the compressor power is increased and limited within a certain range; when the target temperature inside the vehicle is higher than the actual temperature, the cabin heating power of the PTC is increased and limited within a certain range; when the target temperature inside the vehicle is equal to the actual temperature, the battery is heated or cooled based on the battery temperature to reach an optimal operating temperature of the battery, etc.

Exemplarily, based on a fact that the charging power control target is axis X, the power decrease rate of the power generation end in each control cycle can be found out from the table. The details are specifically shown in Table 2. Taking a set value B being 0 kW as an example, that is, when the difference between the battery charging power boundary and the actual charging power is equal to - 4 kW, the power of the power consumption end is increased at a rate of 4 kW per 1 s; when the difference between the battery charging power boundary and the actual charging power is equal to 0 kW, the power of the power consumption end is still increased at a rate of 2 kW per 1 s until the difference between the battery charging power boundary and the actual charging power is equal to 3 kW, then no processing is performed. It should be noted that the values and corresponding relationships between the charging power control target and the power increase slope of the power consumption end in Table 1 and Table 2 are merely for illustrative purposes. The charging power control targets for different risk levels can be flexibly set, and the present application is not limited thereto.

**Table 2**

| | | | | | | | | | | | | | | | | |
|---|---|---|---|---|---|---|---|---|---|---|---|---|---|---|---|---|
| Charging power control target -kW | -5 | -4 | - 3 | -2 | -1 | 0 | 1 | 2 | 3 | 4 | 5 | 6 | 7 | 8 | 9 | 1 0 |
| Power increase slope of a power consumption end -kW/s | 5 | 4 | 3 | 2 | 2 | 2 | 2 | 2 | 2 | 2 | 2 | 2 | 2 | 2 | 2 | 2 |

After the processing of each control cycle, it directly proceeds to the sixth step.

Step 6: judging whether the overcharging risk is eliminated, wherein the judgment condition for eliminating the overcharging risk can be set as the charging power control target being greater than or equal to a set value D, where D is greater than C. Exemplarily, the set value D is 3 kW, and at this time, the actual charging power is far lower than the charging power boundary; if the judgment result is yes, then the processing is directly completed; if the judgment result is no, then return to step 2.

In the embodiments of the present application, access conditions such as the state of a whole vehicle, the battery charging power boundary, and the actual charging power are identified as a basis for judging whether the in-vehicle battery has an overcharging risk. According to the overcharging risk level, it is determined to limit the power of the power generation end based on safety or increase the power of the power consumption end based on economy, such that the actual battery charging power can quickly drop within a safety threshold and form a closed-loop control. In this way, the safety risk of the battery reporting an overcharging fault due to continuous overcharging can be avoided in real time. This control solution can not only meet the safety requirement that the actual charging power does not exceed the charging power boundary of the battery, but also ensure that the battery is charged or the electrical appliances of the whole vehicle are powered to the greatest extent based on economy under operating conditions such as coasting and braking charging, thereby ensuring the safety and economic needs of users to the greatest extent.

This embodiment further provides an apparatus for controlling the charging power of an in-vehicle battery. This apparatus is configured to implement the above embodiments and preferred implementation manners, and the contents that have been described will not be repeated redundantly. As used hereinafter, the term "module" can be a combination of software and/or hardware that implements a predetermined function. Although the apparatuses described in the following embodiments are preferably implemented in software, however, implementation in hardware or a combination of software and hardware is also possible and conceived.

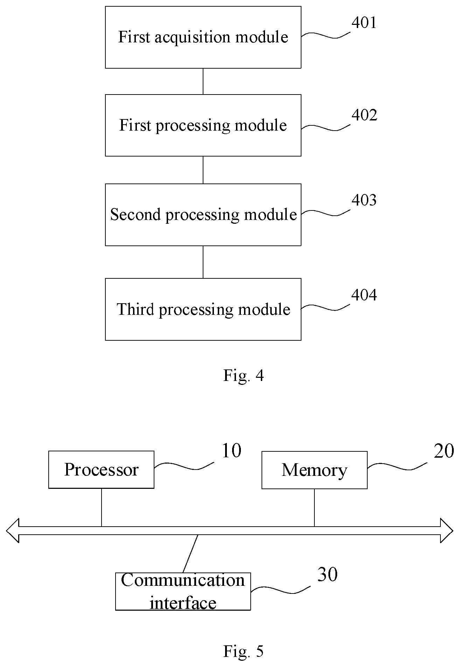

This embodiment provides an apparatus for controlling the charging power of an in-vehicle battery. As shown in Fig. 4, the apparatus includes:
a first acquisition module 401 configured to acquire a current battery charging power boundary and a current actual charging power of the in-vehicle battery of a target vehicle during driving;
a first processing module 402 configured to determine an overcharging risk level of the charging power of the in-vehicle battery based on a difference between the current battery charging power boundary and the current actual charging power;
a second processing module 403 configured to determine a charging power adjustment solution based on the overcharging risk level of the charging power; and
a third processing module 404 configured to control operation of the target vehicle based on the charging power adjustment solution.

In some optional embodiments, the first processing module 402 includes:
a first processing unit configured to determine a current difference interval corresponding to the difference between the current battery charging power boundary and the current actual charging power based on a preset division of ranges of difference intervals; and
a second processing unit configured to determine the overcharging risk level of the charging power of the target vehicle corresponding to the current difference interval.

In some optional embodiments, the difference intervals include a first difference interval, a second difference interval, and a third difference interval;
a maximum value of the first difference interval is less than a minimum value of the second difference interval;
a maximum value of the second difference interval is less than a minimum value of the third difference interval.

The second processing unit includes:
a first processing subunit configured to determine that the overcharging risk level of the charging power of the target vehicle is high risk when the current difference interval is the first difference interval;
a second processing subunit configured to determine that the overcharging risk level of the charging power of the target vehicle is low risk when the current difference interval is the second difference interval; and
a third processing subunit configured to determine that the overcharging risk level of the charging power of the target vehicle is no risk when the current difference interval is the third difference interval.

In some optional embodiments, the second processing module 403 includes:
a third processing unit configured to determine that the charging power adjustment solution is a solution for reducing the power of a power generation end when the overcharging risk level of the charging power is high risk;
a fourth processing unit configured to determine that the charging power adjustment solution is a solution for increasing the power of a power consumption end when the overcharging risk level of the charging power is low risk; and
a fifth processing unit configured to determine that the charging power adjustment solution is a solution for maintaining the current operating state of the vehicle when the overcharging risk level of the charging power is no risk.

In some optional embodiments, the third processing unit includes:
a fourth processing subunit configured to determine a target adjustment power based on a current value of the difference;
a fifth processing subunit configured to determine a power decrease rate of the power generation end in each control cycle based on the target adjustment power; and
a sixth processing subunit configured to obtain a solution for reducing the power of the power generation end based on the power decrease rate of the power generation end in each control cycle.

In some optional embodiments, the fourth processing unit includes:
a seventh processing subunit configured to determine a target adjustment power based on a current value of the difference;
an eighth processing subunit configured to determine a power increase rate of the power consumption end in each control cycle based on the target adjustment power; and
a ninth processing subunit configured to obtain a solution for increasing the power of the power consumption end based on the power increase rate of the power consumption end in each control cycle.

In some optional embodiments, the third processing module 404 includes:
a sixth processing unit configured to reduce the power of the power generation end of the target vehicle in a current control cycle based on a power decrease rate of the power generation end in each control cycle, or increase the power of the power consumption end of the target vehicle in a current control cycle based on a power increase rate of the power consumption end in each control cycle; and
a seventh processing unit configured to recall the first acquisition module 401 to operate repeatedly until the difference is greater than a preset threshold.

In some optional embodiments, the sixth processing unit includes:
a tenth processing subunit configured to increase the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle.

In some optional embodiments, the tenth processing subunit includes:
a first acquisition sub-module configured to acquire current temperature and target temperature inside the target vehicle;
a first processing submodule configured to increase the power of the air conditioning compressor of the target vehicle in the current control cycle based on the power increase rate of the power consumption end in each control cycle when the current temperature is greater than the target temperature;
a second processing submodule configured to increase the cabin heating power of the target vehicle in the current control cycle based on the power increase rate of the power consumption end in each control cycle when the current temperature is lower than the target temperature;
a third processing submodule configured to: when the current temperature is equal to the target temperature, if the actual temperature of the in-vehicle battery is inconsistent with the optimal operating temperature, increase the heating or cooling power of the in-vehicle battery of the target vehicle in the current control cycle based on the power increase rate of the power consumption end in each control cycle; and
a fourth processing submodule configured to: if the actual temperature of the in-vehicle battery is consistent with the optimal operating temperature, increase the power of the in-vehicle low-power electrical device of the target vehicle in the current control cycle based on the power increase rate of the power consumption end in each control cycle.

The data transmission apparatus in this embodiment is presented in the form of a functional unit. The unit herein refers to an ASIC (Application Specific Integrated Circuit) circuit, a processor and a memory that execute one or more software or fixed programs, and/or other devices that can provide the above functions.

Further functional descriptions of the above modules and units are the same as those in the corresponding method embodiments described above, and will not be repeated redundantly herein.

The embodiments of the present application also provide a vehicle equipped with the apparatus for controlling the charging power of an in-vehicle battery shown in Fig. 4 above.

Please refer to Fig. 5, Fig. 5 is a structural schematic diagram of a vehicle provided by an optional embodiment of the present application. As shown in Fig. 5, the vehicle includes: one or more processors 10, a memory 20, and interfaces for connecting various components, and the interfaces include high-speed interfaces and low-speed interfaces. The components are communicatively connected with each other using different buses and can be mounted on a common motherboard or can be mounted in other ways as needed. The processor can process instructions executed within a computer device, including instructions stored in the memory or on the memory for displaying graphical information of the GUI on an external input/output apparatus (such as a display device coupled to the interface). In some optional embodiments, a plurality of processors and/or a plurality of buses can be used together with a plurality of memories if necessary. Similarly, a plurality of computer devices can be connected, and each device provides some necessary operations (for example, as a server array, a group of blade servers, or a multi-processor system). In Fig. 5, one processor 10 is taken as an example.

The processor 10 may be a central processing unit, a network processor, or a combination thereof. The processor 10 may further include a hardware chip. The above hardware chip may be an application-specific integrated circuit, a programmable logic device, or a combination thereof. The above programmable logic device may be a complex programmable logic device, a field-programmable gate array, a generic array logic, or any combination thereof.

The memory 20 stores instructions executable by at least one processor 10, such that the at least one processor 10 executes the method shown in the above embodiments.

The memory 20 may include a program storage area and a data storage area, wherein the program storage area can store an operating system and application programs required for at least one function; and the data storage area can store data created according to the usage of computer devices for displaying mini-program landing pages, etc. In addition, the memory 20 may include a high-speed random-access memory and may also include non-transitory memories, such as at least one magnetic disk storage device, a flash memory device, or other non-transitory solid-state storage devices. In some optional embodiments, the memory 20 may optionally include memories remotely located relative to the processor 10, and these remote memories can be connected to the computer device via a network. Examples of the above network include, but are not limited to, the Internet, an intranet, a local area network, a mobile communication network, and combinations thereof.

The memory 20 may include a volatile memory, such as a random-access memory; the memory may also include a non-volatile memory, such as a flash memory, a hard disk or a solid-state drive; and the memory 20 may also include a combination of the above types of memories.

The vehicle also includes a communication interface 30 for the electronic device to communicate with other devices or communication networks.

The embodiments of the present application also provide a computer-readable storage medium. The methods according to the embodiments of the present application may be implemented in hardware or firmware, or as a computer code that can be recorded on a storage medium, downloaded over a network, stored on a remote storage medium or a non-transitory machine-readable storage medium, and stored on a local storage medium. Therefore, the methods described herein may be stored on a storage medium using a general-purpose computer, a dedicated processor, or programmable or dedicated hardware. The storage medium can be a magnetic disk, an optical disk, a read-only memory, a random-access memory, a flash memory, a hard disk or a solid-state drive, etc. Optionally, the storage medium can also include a combination of the above types of memories. It can be understood that a computer, a processor, a microprocessor controller, or programmable hardware includes a storage component that can store or receive software or computer code. When the software or computer code is accessed and executed by the computer, the processor, or the hardware, the method shown in the above embodiments is implemented.

Although the embodiments of the present application have been described with reference to the accompanying drawings, those skilled in the art can make various modifications and variations without departing from the spirit and scope of the present application, and such modifications and variations shall all fall within the scope defined by the appended claims.

## Claims

1. A method for controlling charging power of an in-vehicle battery, comprising:
acquiring a current battery charging power boundary and a current actual charging power of the in-vehicle battery of a target vehicle during driving;
determining an overcharging risk level of the charging power of the in-vehicle battery based on a difference between the current battery charging power boundary and the current actual charging power;
determining a charging power adjustment solution based on the overcharging risk level of the charging power; and
controlling operation of the target vehicle based on the charging power adjustment solution.

2. The method according to claim 1, wherein the step of determining an overcharging risk level of the charging power of the in-vehicle battery based on a difference between the current battery charging power boundary and the current actual charging power comprises:
determining a current difference interval corresponding to the difference between the current battery charging power boundary and the current actual charging power based on a preset division of ranges of difference intervals; and
determining the overcharging risk level of the charging power of the target vehicle corresponding to the current difference interval.

3. The method according to claim 2, wherein
the difference intervals include: a first difference interval, a second difference interval, and a third difference interval;
a maximum value of the first difference interval is less than a minimum value of the second difference interval;
a maximum value of the second difference interval is less than a minimum value of the third difference interval;
the step of determining the overcharging risk level of the charging power of the target vehicle corresponding to the current difference interval comprises:
when the current difference interval is the first difference interval, determining that the overcharging risk level of the charging power of the target vehicle is high risk;
when the current difference interval is the second difference interval, determining that the overcharging risk level of the charging power of the target vehicle is low risk; and
when the current difference interval is the third difference interval, determining that the overcharging risk level of the charging power of the target vehicle is no risk.

4. The method according to claim 3, wherein the step of determining the charging power adjustment solution based on the overcharging risk level of the charging power comprises:
when the overcharging risk level of the charging power is high risk, determining that the charging power adjustment solution is a solution for reducing the power of a power generation end;
when the overcharging risk level of the charging power is low risk, determining that the charging power adjustment solution is a solution for increasing the power of a power consumption end; and
when the overcharging risk level of the charging power is no risk, determining that the charging power adjustment solution is a solution for maintaining the current operating state of the vehicle.

5. The method according to claim 4, wherein the step of determining that the charging power adjustment solution is a solution for reducing the power of a power generation end comprises:
determining a target adjustment power based on a current value of the difference;
determining a power decrease rate of the power generation end in each control cycle based on the target adjustment power; and
obtaining a solution for reducing the power of the power generation end based on the power decrease rate of the power generation end in each control cycle.

6. The method according to claim 4, wherein the step of determining that the charging power adjustment solution is a solution for increasing the power of the power consumption end comprises:
determining a target adjustment power based on a current value of the difference;
determining a power increase rate of the power consumption end in each control cycle based on the target adjustment power; and
obtaining a solution for increasing the power of the power consumption end based on the power increase rate of the power consumption end in each control cycle.

7. The method according to claim 5 or 6, wherein the step of controlling the operation of the target vehicle based on the charging power adjustment solution comprises:
reducing the power of the power generation end of the target vehicle in a current control cycle based on a power decrease rate of the power generation end in each control cycle, or increasing the power of the power consumption end of the target vehicle in a current control cycle based on a power increase rate of the power consumption end in each control cycle; and
repeating the step of acquiring the current battery charging power boundary and the current actual charging power of the in-vehicle battery of the target vehicle during driving, until the difference is greater than a preset threshold.

8. The method according to claim 7, wherein the step of increasing the power of the power consumption end of the target vehicle in the current control cycle based on the power increase rate of the power consumption end in each control cycle comprises:
increasing the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle.

9. The method according to claim 8, wherein the step of increasing the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle comprises:
acquiring current temperature and target temperature inside the target vehicle;
when the current temperature is greater than the target temperature, increasing the power of the air conditioning compressor of the target vehicle in the current control cycle based on the power increase rate of the power consumption end in each control cycle;
when the current temperature is lower than the target temperature, increasing the cabin heating power of the target vehicle in the current control cycle based on the power increase rate of the power consumption end in each control cycle;
when the current temperature is equal to the target temperature, if the actual temperature of the in-vehicle battery is inconsistent with the optimal operating temperature, increasing the heating or cooling power of the in-vehicle battery of the target vehicle in the current control cycle based on the power increase rate of the power consumption end in each control cycle; and
if the actual temperature of the in-vehicle battery is consistent with the optimal operating temperature, increasing the power of the in-vehicle low-power electrical device of the target vehicle in the current control cycle based on the power increase rate of the power consumption end in each control cycle.

10. An apparatus for controlling charging power of an in-vehicle battery, comprising:
a first acquisition module configured to acquire a current battery charging power boundary and a current actual charging power of the in-vehicle battery of a target vehicle during driving;
a first processing module configured to determine an overcharging risk level of the charging power of the in-vehicle battery based on a difference between the current battery charging power boundary and the current actual charging power;
a second processing module configured to determine a charging power adjustment solution based on the overcharging risk level of the charging power; and
a third processing module configured to control operation of the target vehicle based on the charging power adjustment solution.

11. The apparatus according to claim 10, wherein the first processing module comprises:
a first processing unit configured to determine a current difference interval corresponding to the difference between the current battery charging power boundary and the current actual charging power based on a preset division of ranges of difference intervals; and
a second processing unit configured to determine the overcharging risk level of the charging power of the target vehicle corresponding to the current difference interval.

12. The apparatus according to claim 11, wherein the difference intervals comprise a first difference interval, a second difference interval, and a third difference interval;
a maximum value of the first difference interval is less than a minimum value of the second difference interval;
a maximum value of the second difference interval is less than a minimum value of the third difference interval;
the second processing unit comprises:
a first processing subunit configured to determine that the overcharging risk level of the charging power of the target vehicle is high risk when the current difference interval is the first difference interval;
a second processing subunit configured to determine that the overcharging risk level of the charging power of the target vehicle is low risk when the current difference interval is the second difference interval; and
a third processing subunit configured to determine that the overcharging risk level of the charging power of the target vehicle is no risk when the current difference interval is the third difference interval.

13. The apparatus according to claim 12, wherein the second processing module comprises:
a third processing unit configured to determine that the charging power adjustment solution is a solution for reducing the power of a power generation end when the overcharging risk level of the charging power is high risk;
a fourth processing unit configured to determine that the charging power adjustment solution is a solution for increasing the power of a power consumption end when the overcharging risk level of the charging power is low risk; and
a fifth processing unit configured to determine that the charging power adjustment solution is a solution for maintaining the current operating state of the vehicle when the overcharging risk level of the charging power is no risk.

14. The apparatus according to claim 13, wherein the third processing unit comprises:
a fourth processing subunit configured to determine a target adjustment power based on a current value of the difference;
a fifth processing subunit configured to determine a power decrease rate of the power generation end in each control cycle based on the target adjustment power; and
a sixth processing subunit configured to obtain a solution for reducing the power of the power generation end based on the power decrease rate of the power generation end in each control cycle.

15. The apparatus according to claim 13, wherein the fourth processing unit comprises:
a seventh processing subunit configured to determine a target adjustment power based on a current value of the difference;
an eighth processing subunit configured to determine a power increase rate of the power consumption end in each control cycle based on the target adjustment power; and
a ninth processing subunit configured to obtain a solution for increasing the power of the power consumption end based on the power increase rate of the power consumption end in each control cycle.

16. The apparatus according to claim 14 or 15, wherein the third processing module comprises:
a sixth processing unit configured to reduce the power of the power generation end of the target vehicle in a current control cycle based on a power decrease rate of the power generation end in each control cycle, or increase the power of the power consumption end of the target vehicle in a current control cycle based on a power increase rate of the power consumption end in each control cycle; and
a seventh processing unit configured to recall the first acquisition module to operate repeatedly until the difference is greater than a preset threshold.

17. The apparatus according to claim 16, wherein the sixth processing unit comprises:
a tenth processing subunit configured to increase the power of an air conditioning compressor, or the cabin heating power, or the heating or cooling power of the in-vehicle battery, or the power of an in-vehicle low-power electrical device of the target vehicle in the current control cycle based on the power increase rate of the power consumption end in each control cycle.

18. The apparatus according to claim 17, wherein the tenth processing subunit comprises:
a first acquisition sub-module configured to acquire current temperature and target temperature inside the target vehicle;
a first processing submodule configured to increase the power of the air conditioning compressor of the target vehicle in the current control cycle based on the power increase rate of the power consumption end in each control cycle when the current temperature is greater than the target temperature;
a second processing submodule configured to increase the cabin heating power of the target vehicle in the current control cycle based on the power increase rate of the power consumption end in each control cycle when the current temperature is lower than the target temperature;
a third processing submodule configured to: when the current temperature is equal to the target temperature, if the actual temperature of the in-vehicle battery is inconsistent with the optimal operating temperature, increase the heating or cooling power of the in-vehicle battery of the target vehicle in the current control cycle based on the power increase rate of the power consumption end in each control cycle; and
a fourth processing submodule configured to: if the actual temperature of the in-vehicle battery is consistent with the optimal operating temperature, increase the power of the in-vehicle low-power electrical device of the target vehicle in the current control cycle based on the power increase rate of the power consumption end in each control cycle.

19. A vehicle, comprising:
a memory and a processor, wherein the memory and the processor are communicatively connected with each other, computer instructions are stored in the memory, and the processor is configured to execute the method according to any one of claims 1 to 9 by executing the computer instructions.

20. A computer-readable storage medium, wherein the computer-readable storage medium has computer instructions stored therein, and the computer instructions are configured to enable a computer to execute the method according to any one of claims 1 to 9.
